# EUROPEAN PATENT SPECIFICATION

(11) **EP 4 300 436 B1**
(45) Date of publication and mention of the grant of the patent: **02.12.2026**
(21) Application number: 22382620.7
(22) Date of filing: 30.06.2022
(51) Int. Cl.: G06V 10/82, G06V 20/52, G06V 20/59

(54) **METHOD AND SYSTEM FOR DETECTING PRESENCE OF OBJECTS IN PASSENGER COMPARTMENTS OF TRANSPORT MEANS**
VERFAHREN UND SYSTEM ZUM DETEKTION DER ANWESENHEIT VON GEGENSTÄNDEN IN FAHRGASTRÄUMEN VON TRANSPORTMITTELN
PROCÉDÉ ET SYSTÈME DE DÉTECTION DE PRÉSENCE D'OBJETS DANS DES COMPARTIMENTS DE PASSAGERS DE MOYENS DE TRANSPORT

(43) Date of publication of application: 03.01.2024
(73) Proprietor: Fundacion Centro de Tecnologias de Interaccion Visual y comunicaciones Vicomtech, 20009 Donastia-San Sebastian (Gipuzkoa) (ES)
(72) Inventor: Unzueta, Luis, San Sebastián (ES); Aranjuelo, Nerea, San Sebastián (ES); Elordi, Unai, San Sebastián (ES); Apellaniz, Jose Luis, San Sebastián (ES); García, Sara, San Sebastián (ES); García, Jorge, San Sebastián (ES); Otaegui, Oihana, San Sebastián (ES); Danielli, Maxime, Merignac (FR)
(74) Representative: Balder IP Law, S.L.

(56) References cited:
- EP-A1- 3 786 836
- US-A1- 2020 231 109
- US-A1- 2021 150 235
- US-B1- 10 953 850
- KOMATSU SHUNTA ET AL: "Passenger Flow Estimation with Bipartite Matching on Bus Surveillance Cameras", 2021 IEEE 4TH INTERNATIONAL CONFERENCE ON MULTIMEDIA INFORMATION PROCESSING AND RETRIEVAL (MIPR), IEEE, 8 September 2021 (2021-09-08), pages 206 - 212, XP033991661, DOI: 10.1109/MIPR51284.2021.00038

## Description

### TECHNICAL FIELD

This invention is related to the field of monitoring and surveillance of passenger compartments of transport means, such as the cabin of an aircraft, the wagon of a train, the space reserved for passengers in a bus, etc. More particularly, the invention refers to methods and systems for detecting the presence of objects in passenger compartments of any kind of transport means, these objects being, for example, unallowed objects or objects located in unallowed locations within the passenger compartments.

### BACKGROUND OF THE INVENTION

In the passenger transportation sector, there exist a number or rules and regulations regarding the storage and location of objects within the passenger compartments. These rules and regulations generally forbid the presence of objects, such as suitcases, baby carriages, bags or any other object or package in transit areas of the passenger compartment, in proximity to the emergency exits or in other places within the passenger compartment that may pose a risk for the crew or passengers. Besides, these regulations and rules forbid the presence of objects such as weapons, animals outside of their transport cages, etc., and may even restrict the presence of passengers in determined locations within the passenger compartments during specific parts of the travel.

For the particular case of aircrafts, during critical flight phases such as taxiing, takeoff and landing, and emergency periods such as the aircraft going through atmospheric turbulence areas, crew members have to monitor the passengers in each cabin of the aircraft, for checking that they are correctly seated, with the backrest of the seats in vertical position and the seat belt fastened. They have to check also that objects, such as bags, suitcases or others are not located in unallowed places within the cabin. For example, there cannot be objects into the aisles or in proximity to the emergency exits during the whole flight and there cannot be any object in the seats, at the passenger's feet or on the backrest of the seats during the takeoff, landing or during the emergency periods.

Besides, during the takeoff, landing or during the emergency periods, the crew members have to be sitting on their dedicated seats, usually called crew attendant seats. Thus, during these periods they cannot check whether the passengers are correctly seated on their seats, whether there are unallowed objects or whether there are objects in unallowed locations within the aircraft cabin.

In trains, there are usually one or two ticket inspectors to monitor and surveil hundreds of passengers and they are also in charge of many other task onboard. Therefore, they have limited time and resources to periodically check whether there are unallowed objects within the wagons or whether there is luggage or any other bulky object blocking any of the corridors or exits of the train. In buses, the driver cannot be monitoring the space dedicated to the passengers during the trip so there may be objects blocking the rear exists of the bus or the central corridor and the driver could not even have notice it.

Solutions already proposed for providing direct view of the passenger compartments to the crew or drivers include arranging mirrors or video cameras at appropriate locations. However, mirrors may be unaesthetic, cause injury to people inadvertently knocking into one of the mirrors and provide an inaccurate view of parts of the compartment, e.g., in the areas where the passengers have their feet. Moreover, the reduced number, location and orientation of the video cameras in the passenger compartments are generally selected to provide general and inaccurate views of the compartment leaving portions of the compartments, such as part of the space occupied by the passengers, without being monitored.

Document 2015/155379 discloses a monitoring system for the cabin of an aircraft or spacecraft for passenger transportation that detects the presence of the passengers in their respective seats. This solution is merely focused on detecting the presence or absence of the passengers in the seats by comparing images currently gathered with reference images previously obtained.

US 2021/150235 A1 (MESKIMEN SAMUEL COLT [US] ET AL) 20 May 2021 discloses an object recognition computer trained to identify where particular types of objects are located within each of the video streams from different cameras (e.g. within an aircraft), which addresses the variability in the relative orientations and locations of passenger seats relative to the observing cameras between different types of aircraft configurations and/or to compensate for time-based variations in the seat configuration and/or camera configuration within a particular aircraft over its operational lifetime.

US 10 953 850 B1 (PERTSEL SHIMON [US] ET AL) 23 March 2021 discloses a method for implementing seatbelt detection within a vehicle or transport using computer vision.

US 2020/231109 A1 (BALTAXE MICHAEL [IL] ET AL) 23 July 2020 discloses a method for use in a vehicle and to determine a seat belt status that uses one or more cameras and sensors to determine if a seat belt is properly buckled and routed.

Thus, there is a need in the art for methods and systems able to detect the presence of unallowed objects or objects located in unallowed places within the passenger compartments of transportation means that are reliable and have low computational weight so it can be implemented in environments in which the computational resources are limited, such as on board the transport means themselves.

### DESCRIPTION OF THE INVENTION

For overcoming the aforementioned drawbacks, the present invention discloses a method for detecting the presence of objects in passenger compartments of transport means, such as aircrafts, spacecrafts, trains, ships, buses, or any other transport means having a compartment for transporting passengers, that combines deep neural networks (DNNs) and discriminant embedding space-based classifiers to determine said presence. These objects may be unallowed objects (e.g., weapons), objects located in unallowed positions (e.g., any object blocking an emergency exit), or even the passengers being located in unallowed positions within the passenger compartment (e.g., a passenger blocking an aisle in an aircraft).

A first object of the invention is a computer-implemented method for detecting the presence of objects in passenger compartments of transport means. As used herein, the transport means may be any means for transporting passengers including, aircrafts, spacecrafts, buses, ships, boats, vans and trains, among many others. The passenger compartment is the space in the transport means reserved for the transport of the passengers. This passenger compartment may comprise seats or beds for the passengers, emergency exists, corridors, aisles, any other transit areas, areas reserved for leisure of the passengers such as dining cars or similar, etc. In turn, the object may be any object or device, such as bags, suitcases, carriages, etc., that may be carried out by the passenger as their personal luggage or any other object within the passenger compartment such as the seats, trays, belts, windows, etc. As used herein, the term "object" may further include the passengers themselves. Hereinafter, the term "object" will refer to any person or thing that can be seen and/or touched.

The method comprises receiving, at a computing system, at least one image of the inside of a particular passenger compartment of a particular transport means. The images may be gathered by a monitoring system installed within the passenger compartment and may include cameras, video cameras, time of flight cameras, depth sensors, or any other imaging device capable of directly gathering images or generating them from the information that the imaging device is able to capture. As used herein, a "computing device" may be a desktop computer, laptop (or notebook) computer, workstation, tablet computer, mobile phone, smart device, switch, router, server, blade enclosure, or any other processing device or equipment including a processing resource. In examples described herein, a processing resource may include, for example, one processor or multiple processors included in a single computing device or distributed across multiple computing devices.

The method further comprises extracting, by a deep neural network (DNN) of the computing system, a descriptive feature vector associated to the received at least one image. The extracted descriptive feature vector contains information of the at least one image indicative of the presence of objects within the passenger compartment. These objects will be unallowed objects or objects located in unallowed locations or positions within the passenger compartment. As used herein, a deep neural network refers to a stacked neural network, i.e., a network composed of several layers. In turn, neural networks are a set of algorithms, modeled loosely after the human brain, that are designed to recognize patterns. They interpret sensory data through a kind of machine perception, labeling or clustering raw input. The patterns they recognize are numerical, contained in vectors, into which all real-world data, be it images, sound, text or time series, must be translated.

In this context, a "feature" is an individual measurable property or characteristic of the image. These features are usually numeric. Thus, a "descriptive feature vector" refers to a set of numeric values, wherein each value corresponds to a descriptive feature of the image. More particularly, the descriptive feature vector is the raw output of the neural network layer prior to the "fully connected layers". It is a vector that abstractly represents the image content based on the set of images and descriptive labels of the content of each class previously used for training the DNN. The value of each number in this vector is not directly interpretable by a human.

Then, the method classifies, by using a discriminant embedding space-based classifier of the computing system which is associated to the DNN, the at least one image in a particular class of a set of predefined classes based on the associated descriptive feature vector of the image. As used herein, the term "discriminant embedding space-based classifier" may refer to manifold learning algorithms that map data into a lower-dimensional manifold (latent space) by learning the underlying structure of data, simultaneously maximizing the local margin between heterogeneous samples and pushing the homogeneous samples closer. Thus, classification tasks can be carried out with high accuracies and even with simple classifiers such as the nearest neighbor classifier. Some examples of these manifold learning algorithms are LDA (Linear Discriminant Analysis), LDE (Linear Discriminant Embedding), EDA (Exponential Discriminant Analysis), etc. The fact that the discriminant embedding space-based classifier is associated to the DNN means that both have been specifically trained for processing images corresponding to the same particular areas within the passenger compartment.

Preferably, the set of predefined classes are hierarchical predefined classes. Then, the highest-class level may indicate whether the image contains an unallowed object or an object located in an unallowed position, and the rest of levels within the class hierarchy may indicate different attributes of the image such as the presence or absence of a passenger, the presence or absence of an object, the location of the object, etc. The order of the lower and intermediate class levels in the class hierarchy may vary depending on the particular design and application. Each one of the predefined classes are associated to a particular vector manifold. Each class with the hierarchy conceptually group each of the variants in which the main class (the highest in the hierarchy) is fulfilled, and which is visually distinguishable from other variants. The hierarchy is being formed as the different variants in different classes have points in common. The hierarchical predefined classes have been preferably designed such that multi-task learning, applied simultaneously to a main task (the highest class in the hierarchy, which refers to the detection of presence of unallowed objects or objects located in unallowed locations or positions) and to the rest of the auxiliary attributes of the hierarchy (lower classes in the hierarchy), makes the neural network learn better the characteristics of the main task. Additionally, using hierarchical predefined classes allows the application of latent taxonomic structure-guided learning techniques to improve the accuracy of the hierarchy.

After that, the computing system determines the presence of the unallowed objects or the objects located in unallowed locations or positions within the passenger compartment according to the corresponding class associated to the at least the one image. For example, if the image is associated to the class (main class) corresponding to the presence of an object in an unallowed position, then it is determined the presence of an unallowed object within the area of the passenger compartment shown in the image.

As used herein, an "unallowed object" may refer to any object or item which are banned or restricted according to the transportation rules or regulations so they cannot be inside the passenger compartment of a particular transport means. Examples of such objects or items can be flammable liquids and solids, weapons, sharp objects, instruments containing magnets, tear gas devices or any gas cylinders, among many others. Moreover, an "object located in unallowed location or position" may refer to any object, item or even the passenger that may be positioned in a restricted location within the passenger compartment or that being in a non-restricted location its relative position or orientation may not be adequate or safe. Examples of objects being located in unallowed locations or positions might be a bag or suitcase blocking an emergency exit, corridor or aisle in an aircraft, train or bus, the tray table not being in the upright position during aircraft takeoff and landing, a passenger seated in his seat but with his body being inclined such that at least part of the aisle in an aircraft is blocked, a passenger correctly seated in his seat but with a handbag on his knees during aircraft takeoff and landing, etc.

In some embodiments, the computing device receives more than one image of the inside of the particular passenger compartment to monitor different spaces within the passenger compartment. For example, each image may correspond to a different and separated area within the passenger compartment, may correspond to adjacent areas within the passenger compartment or to a combination of separated and adjacent areas within the passenger compartment. Preferably, the number of images received at the computing device may be enough to monitor the whole passenger compartment. The method may use a different DNN with its particular associated discriminant embedding space-based classifier for processing each image received at the computing system. Every DNN-discriminant embedding space-based classifier

In some embodiments, the at least one image analyzed by the method herein disclosed is selected from a group comprising: images of at least one seat inside the passenger compartment, images of transit areas within the passenger compartment, images of emergency exit areas within the passenger compartment or any combination thereof. These images may further comprise groups of seats or a combination of one or more seats with a portion of a transit area or an emergency exit area.

In some embodiments, when the received image contains a combination of seats and/or portions of transit areas and/or emergency exit areas of the inside of the passenger compartment, the method further comprises:
dividing or cropping, by the computing system, the received at least one image in sections;
extracting, by a different DNN, a descriptive feature vector associated to each one of the sections of the at least one image; and
classifying, by a different discriminant embedding space-based classifier associated to each DNN, each section of the at least one image in a particular class of the set of predefined classes based on the associated descriptive feature vector of the section; and
determining, by the computing system, the presence of unallowed objects or objects located in unallowed locations within the passenger compartment according to the corresponding class associated to each section of the at least one image.

Preferably, each section in which the received at least one image is divided corresponds to individual seats, portions of transit areas or portions of emergency exits. By using a specific DNN with its associated discriminant embedding space-based classifier to process each section in which the image has been divided, the accuracy in the detection of the presence of the unallowed objects or objects located in unallowed locations within the passenger compartment is improved. The imaging devices, cameras, video cameras, time of flight cameras, depth sensors, etc. are located at fixed locations within the passenger compartment and with different incidence angles relative to the different sections, which correspond to specific areas within the compartment, in which the image is divided. Thus, a different DNN with its associated discriminant embedding space-based classifier, which have been both trained to specifically process images gathered or generated from that monitored area, are used for processing each section. Additionally, for those images or sections (including particular seats or portions of transit areas or emergency exit areas within the passenger compartment) corresponding to areas of the compartment with the same relative orientation relative to the imaging devices, the same combination of DNN with its associated discriminant embedding space-based classifier could be used to process them. For example, in an aircraft, groups of 3 cameras may gather images of every two contiguous seat rows (six seats per row) such that a first camera of each group may capture images of seats 1A, 2A, 1B, 2B a second camera may capture images of seats 1C,2C,1D,2D and the portion of the aisle between said seats and a third camera may capture images of seats 1E,2E, 1F,2F. The adjacent group of three cameras will capture the same images for rows 3 and 4, and so on. Then, since the cameras will be distributed in the compartment with the same orientation relative to the group of seats and aisle they are monitoring, the same combination of DNN- discriminant embedding space-based classifier will be used to process the sections corresponding to seats 1A, 3A, 5A, 7A, etc. Similarly, the same combination of DNN- discriminant embedding space-based classifier will be used to process the sections corresponding to seat 2A, 4A, 6A, 8A, etc. The same will happen for the rest of sections of the different images which have the same orientation relative to the imaging device that has captured the corresponding image. In this way, the efficiency of the processing of the images is increased since the number DNN with associated discriminant embedding space-based classifiers required to process the images of the whole passenger compartment is reduced.

In some embodiments, the step of determining the presence of objects within the passenger compartment comprises determining the location of the object within the passenger compartment by identifying the image containing the identified object. That is to say, since the image classified in a class that corresponds to the presence of an unallowed object or an object being located in an unallowed position or location within the passenger compartment is directly associated to the imaging device that has gathered said image or from which the cited image has been generated, and the location of the different imaging devices forming the monitoring system in the passenger compartment is known, the specific location of the detected object inside the passenger compartment can be easily derived.

In some embodiments, the method comprises training the discriminant embedding space-based classifier by on-site incremental learning. By applying on-site incremental learning, the discriminant embedding space-based classifier is able to adjusts its model whenever a new example emerges and according to what has been learned from such new example. Thus, data generated by the execution of the above-described computer-implemented method for detecting presence of objects in passenger compartments of transport means can be continuously used to extend the discriminant embedding space-based classifier model's knowledge.

In some embodiments, the deep neural network is previously trained using multi-task learning techniques. That is to say, the DNN model can be trained before being deployed into the computing system of the particular transport means in which is to be used to detect the presence of objects in the respective passenger compartment. As used herein, multi-task learning refers to machine learning techniques in which multiple learning tasks are solved at the same time, while exploiting commonalities and differences across tasks. These techniques provide high learning efficiency and prediction accuracy for the task-specific models, when compared to training the models separately. Other techniques that could be used to train the DNN model are Metric-guided learning to better leverage class hierarchy, and domain-adversarial learning to learn more robust features from different types of data sources (e.g., from different passenger compartments and from synthetic data sources).

Using hierarchical classes is especially convenient when using multi-task learning techniques or metric-guided learning techniques to train the DNN models. Preferably, the specific hierarchy of classes that is going to be used with the associated discriminant embedding space-based classifier has to be taken into account to train the DNN model so the descriptive feature vector extracted by the DNN model are more in line with reality.

In some embodiments, the images gathered or generated from the inside of the passenger compartment are previously pre-processed to adapt them to the requirements of the particular deep neural network. Preferably, these requirements are the dimensions of the image and the range of values in which the pixel values of the image should be.

In some embodiments, based on the particular class in which the at least one image has been classified, the method is further adapted to provide an indication about at least one among:
- distinction of people between passenger and crewmember,
- whether a seat belt of the passenger seat is fastened or not;
- passenger body poses, the body pose being selected from a group comprising: standing, seated, lying down, crouched down and reclined;
- occupancy or open/closed state of the storage compartments;
- tray table in stowed position
- a backrest position of the seat;
- a medical or health indication for a passenger; and
- behavior of a passenger.

Depending on the particular class hierarchy (each class level in the class hierarchy may be associated to one or more attributes) chosen for the implementation of the method herein disclosed, different indications about the presence or absence of objects or their location, state or orientation could be obtained.

A second object of the present invention is a computer program which, when executed by a computer, causes the computer to perform the computer-implemented method previously described. The computer may be a desktop computer, laptop (or notebook) computer, workstation, tablet computer, mobile phone, smart device, switch, router, server, blade enclosure, or any other processing device or equipment including a processing resource. In examples described herein, a processing resource may include, for example, one processor or multiple processors included in a single computing device or distributed across multiple computing devices.

A third object of the present invention is a non-transitory computer-readable storage medium storing a computer program as herein described. As used herein, a "non-transitory computer-readable storage medium" may be any electronic, magnetic, optical, or other physical storage apparatus to contain or store information such as executable instructions, data, and the like. For example, any non-transitory computer-readable storage medium described herein may be any of Random Access Memory (RAM), volatile memory, non-volatile memory, flash memory, a storage drive (e.g., a hard drive), a solid-state drive, any type of storage disc (e.g., a compact disc, a DVD, etc.), and the like, or a combination thereof.

A fourth object of the present invention is a system for detecting the presence of objects, in particular unallowed objects or objects located in unallowed position as previously described, in passenger compartments of transport means, comprising a monitoring system adapted for being installed into a particular passenger compartment of a particular transport means, the monitoring system being formed by a plurality of imaging devices which are orientable towards seats, transit areas and emergency exist areas within the passenger compartment. The imaging devices may be cameras, video cameras, time-of-flight (TOF) cameras, depth sensors, or any other imaging device capable of directly gathering images or generating them. The monitoring system may comprise a processing unit to generate said images from those imaging devices not able to directly capture said images (e.g., TOF-cameras or depth sensors).

The system further comprises a receiving unit configured to receive at least one image of the inside of a particular passenger compartment of a particular transport means captured or generated by the monitoring system and a computing system. In turn, the computing system comprises processing means, configured to extract, by at least one deep neural network (DNN) module of the computing system, a descriptive feature vector of the received at least one image. The descriptive feature vector contains information of the at least one image indicative of the presence of objects within the passenger compartment. In turn, the objects being unallowed objects or objects located in unallowed locations within the passenger compartment.

The processing means are further configured to classify, by means of a discrimination embedded space-based classifier module associated to the at least one DNN, the at least one image in a particular class of a set of predefined classes based on the descriptive feature vector of the at least one image. The system is configured to determine the presence of unallowed objects or objects located in unallowed locations within the passenger compartment according to the corresponding class associated to the at least one image.

In some embodiments, the system comprises a plurality of DNN modules and a plurality of discrimination embedded space-based classifier modules, wherein each DNN module is associated to a particular discrimination embedded space-based classifier module. Then, each DNN module with its associated discrimination embedded space-based classifier module is configured to process one of the images received from the monitoring system.

In some embodiments, the system also comprises a splitting/dividing module configured to split the received at least one image in a plurality of sections, each section containing an individual seat, a portion of a transit area or a portion of emergency exit of the passenger compartment of the transport means. Then, the system is configured such that a different DNN module with its associated discrimination embedded space-based classifier module is used to process each section of the at least one image.

In some embodiments, the system comprises a processing module arranged for pre-processing images captured by each imaging device to adapt them to the requirements of the particular deep neural network. Preferably, these requirements are the dimensions of the image and the range of values in which the pixel values of the image should be.

A fifth object of the present invention is a transport means comprising at least one of a plurality of seats, transit areas and emergency exit areas within at least one passenger compartment and a system for detecting presence of objects as previously described. Preferably, the transport means can be an aircraft, spacecraft, ship, bus, van, train or any other transport means having at least one passenger compartment and being able to transport passengers.

The method and system herein described, by using a combination of deep neural networks and discriminant embedding space-based classifiers to determine the presence of unallowed objects or objects located in unallowed positions within the passenger compartment of transport means, provide a solution with a lower computational weight and cost than other well-known solutions. Thus, this solution is especially convenient to be executed on-board the transport means which normally have limited computational power.

### BRIEF DESCRIPTION OF THE DRAWINGS

To complete the description and in order to provide a better understanding of the invention, a set of drawings is provided. Said drawings form an integral part of the description and illustrate embodiments of the invention, which should not be interpreted as restricting the scope of the invention, but just as an example of how the invention can be carried out. The drawings comprise the following figures:
Fig. 1 shows a flow diagram of a method for detecting presence of objects in passenger compartments of transport means, according to an embodiment of the invention.
Fig. 2 shows a flow diagram of a method for detecting presence of objects in passenger compartments of transport means, according to another embodiment of the invention.
Figure 3 shows an example of a set of predefined hierarchical classes, according to a particular embodiment of the invention
Fig. 4 shows a block diagram of a system for detecting presence of objects in passenger compartments of transport means, according to an embodiment of the invention.
Figure 5 shows a top view of a portion of a cabin of an aircraft with a specific configuration of the monitoring system, according to a particular embodiment of the invention.

### DESCRIPTION OF A MODE OF EMBODIMENT OF THE INVENTION

In the following description, for purposes of explanation, numerous specific details are set forth in order to provide a thorough understanding of the present systems and methods. It will be apparent, however, to one skilled in the art that the present systems, and methods may be practiced without these specific details. Reference in the specification to "an example", "an embodiment" or similar language means that a particular feature, structure, or characteristic described in connection with that example or embodiments is included as described, but may not be included in other examples or embodiments.

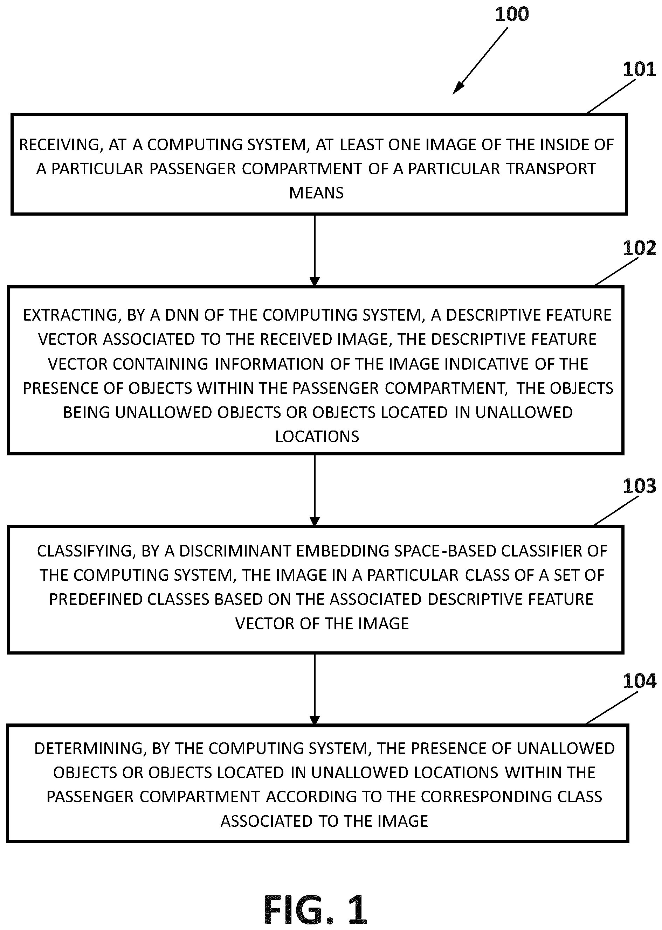

Fig. 1 shows a flow diagram of a method 100 for detecting presence of objects in passenger compartments of transport means, according to an embodiment of the invention.

At step 101 of the method 100, the computing system, in particular a receiving module of the computing system, receives at least one image of the inside of a particular passenger compartment of a particular transport means, e.g., the cabin of an aircraft. Preferably, the receiving module will receive a plurality of images covering the whole space of the passenger compartment. For example, a plurality of cameras attached to or fixedly inserted into the ceiling of the aircraft cabin may be oriented towards the floor of the cabin and may be configured to capture images of the entire cabin. The images may contain one or more seats and some of them may additionally or alternatively contain portions of the aisles, the emergency exists or portions of any other transit area or leisure areas for passengers within the cabin. Preferably, the plurality of images will correspond to adjacent areas of the cabin to cover all the locations where there could be an object.

At step 102 of the method 100, a deep neural network (DNN) extracts a descriptive feature vector of each one of the received images. Each extracted descriptive feature vector contains information of the particular image, from which it has been obtained, that is indicative of the presence of objects within the passenger compartment, in particular, within the portion of the passenger compartment captured by the corresponding image. These objects will be unallowed objects such as weapons or objects located in unallowed locations or positions, a backpack over the passenger's knees or a passenger in the aisle during takeoff of the aircraft, within the passenger compartment.

At step 103 of the method 100, a discriminant embedding space-based classifier, which is associated to the DNN used at step 102, classifies the image in a particular class of a set of predefined classes, preferably hierarchical classes, based on the associated descriptive feature vector obtained for that particular image. Said discriminant embedding space-based classifier maps data from the corresponding descriptive feature vector into a lower-dimensional manifold (latent space) by learning the underlying structure of data and simultaneously maximizing the local margin between heterogeneous samples and pushing the homogeneous samples closer. Then, a nearest neighbor classifier may be applied to classify the image into a particular class. For example, the class in which the image is classified my correspond to an aircraft tray table lowered, which is not allowed during the take-off, landing and other emergency situations.

Thus, at step 104 of the method 100, the system determines, based on the class in which the image has been classified, that the object, the aircraft tray table, shown in that image is an allowed object located in an unallowed position during said periods of the time flight.

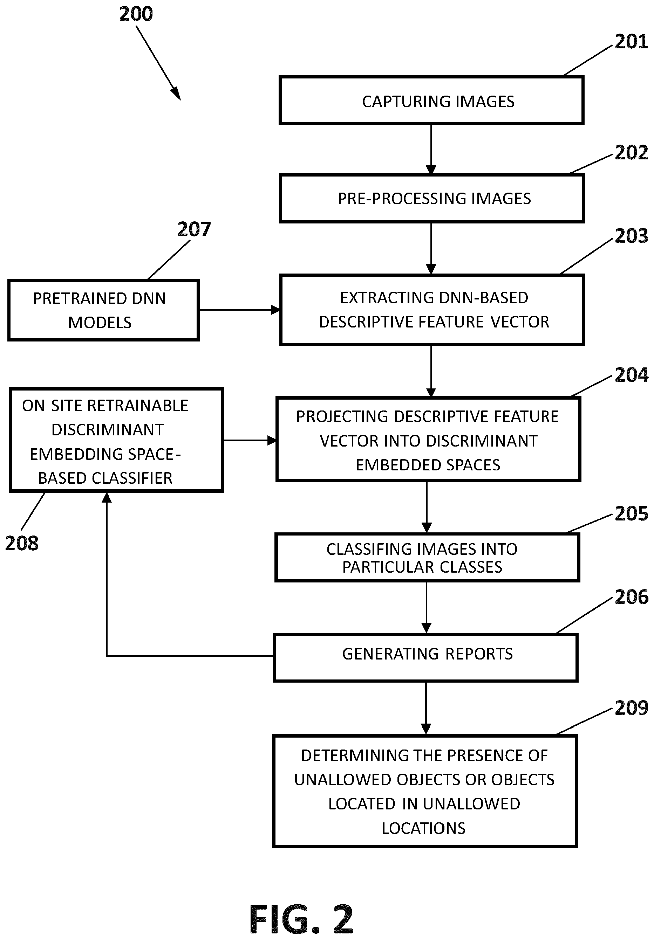

Fig. 2 shows a flow diagram of a method 200 for detecting presence of objects in passenger compartments of transport means, according to another embodiment of the invention.

At step 201 of the method 200, the monitoring system, in particular a camera, captures one image of the inside of a particular passenger compartment of a particular transport means, e.g., the passenger wagon of a train. Preferably, the monitoring system will capture a plurality of images covering the whole space of the wagon with a plurality of distributed cameras. The image may contain one or more seats and some of them may additionally or alternatively contain portions of the corridors, the exists, the emergency exists or portions of any other transit area or leisure areas, such as the bar, for passengers within the wagon. Preferably, the plurality of images will correspond to adjacent areas of the wagon to cover all the locations where there could be an object.

At step 202 of the method 200, the captured images are pre-processed by the computing system to adapt them to the requirements of the particular DNN model that is going to be used. This DNN model may require certain dimensions for the image and specific range of values in which the pixel values of the image should be. Thus, the computing system may use techniques such as pixel intensity normalization, image cropping, image padding, image batching, color histogram equalization, local contrast enhancement, image mirroring, etc., or combinations of said techniques to pre-process said images.

At step 203 of the method 200, a pretrained DNN model 207 extracts a descriptive feature vector of each one of the captured images. Each extracted descriptive feature vector contains information of the particular image that is indicative of the presence of objects within the passenger compartment, in particular, within the portion of the passenger compartment captured by the corresponding image. These objects will be unallowed objects such as weapons or objects located in unallowed locations or positions, a backpack over the passenger's knees or a passenger in the aisle during takeoff of the aircraft, within the passenger compartment. These DNN models will have been pre-trained with multi-task learning techniques, metric-guided learning (especially convenient when the predefined classes are hierarchical classes), and domain-adversarial learning techniques (which are especially convenient when training data is received from different data sources).

At step 204 of the method 200, an on-site retrainable discriminant embedding space-based classifier 208, which is associated to the DNN model 207, projects or maps 204 the descriptive feature vector into a discriminant embedded space (lower-dimensional manifold) and classifies 205, e.g., by a nearest neighbor classifier of the discriminant embedding space-based classifier 208, the image in a particular class of a set of predefined classes, preferably hierarchical classes, based on the descriptive feature vector. The discriminant embedding space-based classifier 208 is on-site trained with the reports generated, at step 206 of the method 200, by the computing system after the image is classified.

Thus, at step 209 of the method 200, the computing system determines, based on the class (e.g., an allowed object located in a corridor of the wagon) in which the image has been classified, that the object shown in that image, e.g., a suitcase in the corridor of the wagon, is an allowed object located in an unallowed position within the wagon.

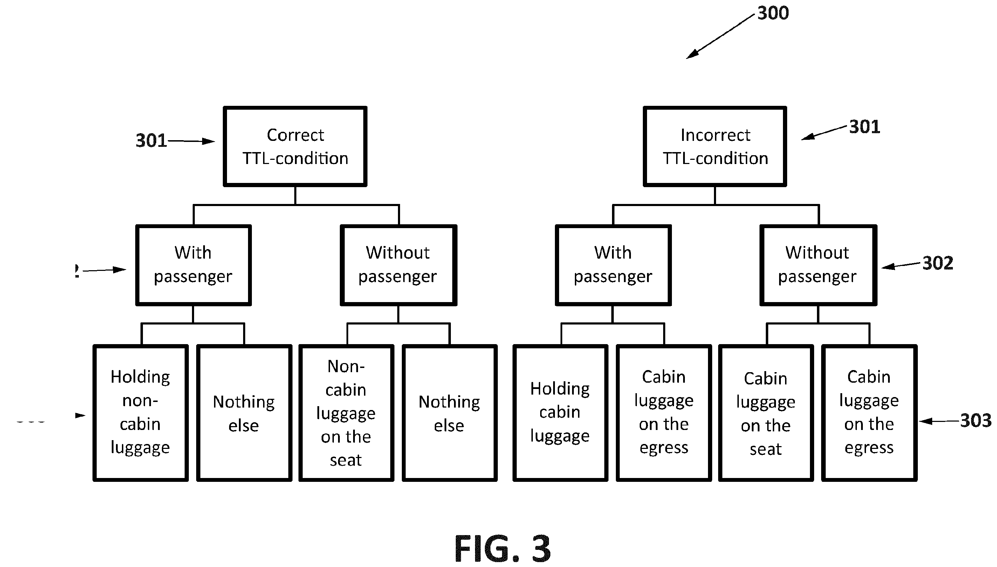

Figure 3 shows an example of a set of predefined hierarchical classes 300, according to a particular embodiment of the invention.

This particular example shows the topology of a set of hierarchical classes 300 associated to the different stages of the trip of an aircraft, in particular, to the Taxi stage, Take-off stage and Landing stage (TLL stages) which are further based on cabin luggage placement. The compliance with the rules for the cabin luggage placement during these three stages is what has been named as "TLL-conditions" in figure 3.

As depicted in figure 3, the topology comprises three levels of classes 301-303. The upper level 301 corresponds to the correct TLL-condition, i.e., there are not objects (luggage) located in unallowed positions, and incorrect TLL-condition, i.e., there are objects (luggage) located in unallowed positions or locations within the cabin during the three mentioned stages of the trip of an aircraft. The intermediate level 302 corresponds to the presence or absence of the passenger in the image while the lower level corresponds to the existence or absence of additional objects, in particular cabin luggage or non-cabin luggage, that could be held by the passenger of located on the empty seat.

Based on the obtained classification of the image, in this case "correct TLL-condition" or "incorrect-TLL condition", the computing system will determine whether there is or there is not unallowed objects or objects located in unallowed positions or locations within the passenger compartment during the three mentioned stages of the trip of an aircraft. Besides, based on the different information obtained from the attributes assigned during the classification, attributes corresponding to the levels in the hierarchy below the main level, other information can be obtained. For example, if the image is classified as "Incorrect-TLL condition" and the discriminant embedding space-based classifier has also determined that there is "cabin luggage on the seat" and "without passenger" it can be determined that in that particular seat someone has left some luggage. The more hierarchically fine-grained organized the classes are, more information can be obtained relative to the object in the image. However, the more fine-grained classes are included, the more chances of error it may have to distinguish each fine-grained class.

In fact, the hierarchy shown in figure 3, or any other hierarchy designed for this purpose, could be extended to additional applications beyond TTL-condition classification based on cabin luggage placement, by including even more fine-grained classes. For example, these more fine-grained classes could be, among many others:
- Distinction of people between passenger and crewmember, including when they are in the corridor.
- People body poses (standing, seated, lying down, crouched down, reclined). • Suspicious and/or bad behavior of people.
- Weapons.
- Open/closed airplane compartment.
- Fastened (or not fastened) seatbelts.
- Whether PEDs (Portable Electronic Devices) are stowed (or not).
- Tray tables in (and not it) stowed position.
- Seat backs in (and not in) fully upright positions.
- Sleeper seats and lie-flat in (and not in) TTL positions.
- Seats with (and without) adjustable footrest and headrests retracted.
- Whether food, beverages, or tableware are picked up (or not).

The same considerations can be done to train the DNN models with auxiliary attributes,

While in the exemplary set of hierarchical classes shown in figure 3 said classes are associated to the different stages of the trip of an aircraft are further based on cabin luggage placement, many other sets of classes could be designed depending on their particular application. Alternatively, the solution herein disclosed could be implemented using other non-hierarchical classes, such as classes determining whether a seat is occupied or empty, whether the seat is occupied by a person or an object, whether the object is an allowed or an unallowed object, etc.

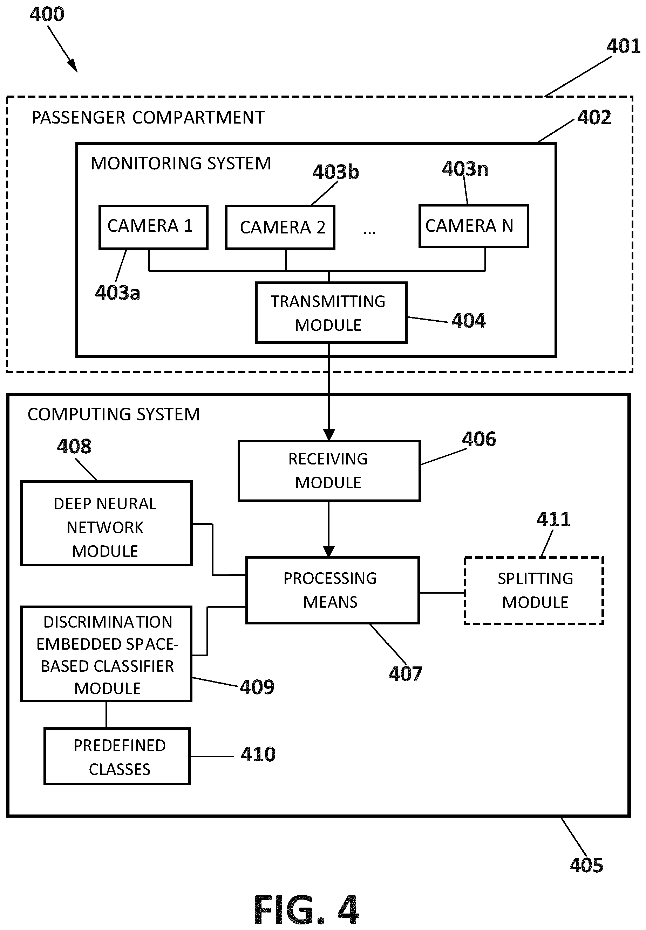

Fig. 4 shows a block diagram of a system 400 for detecting presence of objects in passenger compartments 401 of transport means, according to an embodiment of the invention. It should be understood that the system 400 may include additional components and that some of the components described herein may be removed and/or modified without departing from a scope of the system 400. Additionally, implementation of the example system 400 is not limited to such example as shown in Figure 4.

The system 400 is to detect the presence of objects, in particular unallowed objects or objects located in unallowed position as previously described, in passenger compartments 401 of transport means, such as the cabin of an aircraft or a spacecraft, the wagon of a train, the space reserved for passengers in a bus, etc. The system 400 comprises a monitoring system 402 adapted for being installed inside the corresponding passenger compartment 402 and it is formed by a plurality of cameras 403a-n. Preferably, these cameras will be installed into the ceiling or the upper areas of the side walls of the passenger compartment 401 and oriented towards the space occupied by the passengers. For these cases in which the monitoring system 401 is formed by imaging devices (e.g., TOF-cameras or depth sensors) that not able to directly capture said images but to capture data form which said images are to be generated, the monitoring system 402 may further comprises a processing unit (not shown in this figure) to locally generate the images. Alternatively, said captured raw data may be sent to the computing system 405 where the images may be generated.

The images or raw data captured by the monitoring system 402 is sent by a transmitting module 404 to a receiving module 406 of the computing system 405. The communications between the transmitting module 404 and the receiving module 406 may be wired or may be a wireless communication using GPRS, WiFi, Bluetooth, or any other wireless protocol.

While figure 4 shows only the monitoring system 402 being located into the passenger compartment 401 with the computing system 405 being installed in some other place within the transport means, such as the flight deck in an aircraft, the bus cabin or the locomotive in a train, in some other implementations the monitoring system 402 and the computing system 405 may be located within the passenger compartment 401.

The computing system further comprise processing means 407 configured to extract, by means of a DNN module 408, a descriptive feature vector of the images received from the monitoring system 402. Each descriptive feature vector contains information of the one corresponding image indicative of the presence of objects within the passenger compartment, in particular within the area captured by the image.

The processing means 407 are further configured to, by means of a discrimination embedded space-based classifier module 409 associated to the at least one DNN module, classify each image in a particular class of a set of predefined classes 410 based on the respective descriptive feature vectors of the images.

The processing means 407 are also configured to determine the presence of unallowed objects or objects located in unallowed locations within the passenger compartment according to the corresponding classes associated to the received images.

The computing system may further comprise a splitting module 411 configured to split the received images in a plurality of sections, each section containing an individual seat, a portion of a transit area or a portion of an emergency exit of the passenger compartment of the transport means. Then a different combination of DNN module with its associated discrimination embedded space-based classifier module may be used by the processing means 407 to process each section of the at least one image.

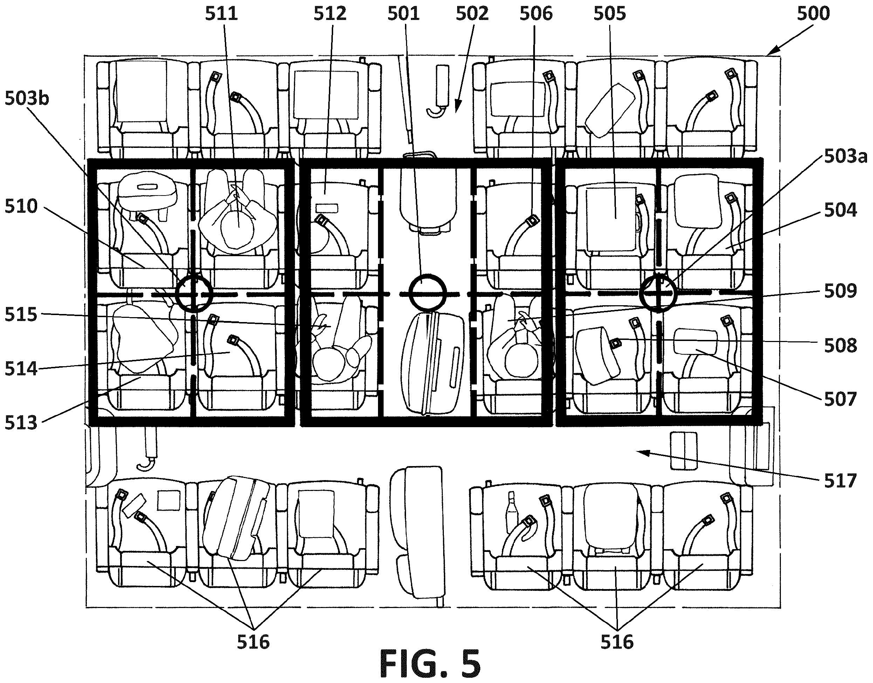

Figure 5 shows a top view of a portion of a cabin 500 of an aircraft including a specific configuration for the monitoring system, according to a particular embodiment of the invention.

This monitoring system configuration comprises, for each two contiguous seat rows of the cabin 500, one camera 501 centred over the corridor 502 which is oriented and configured to monitor a portion of the corridor 502 and four PAXs 506,509,512,515 located at both sides of that portion of the corridor 502 and two cameras 503a-b over the seats 504,505,507,508,510,511,513,514, each of them being positioned and configured to monitor the four PAXs closer to the windows. In particular, camera 503a is centred over the seats 504, 505, 507, 508 and camera 503b is centred over seats 510, 511, 513, 514. Each of the images captured (solid bold lines) by the cameras 503a-b will be preferably cropped (dotted lines) in four sections, each section containing an individual seat. The image captured (solid bold line) by the corridor camera 501 will be preferably cropped (dotted lines) in six sections, the two central sections being portions of the corridor 502 in correspondence with each seat row and the four side sections corresponding to individual seats 506,509,512,515.

The image sections corresponding to seats 510, 511, 512, 513, 514 and 515 are mirrored as part of their pre-processing phase. Then, it can be considered that the relative position and orientation of the cameras 503a-b, respectively, over the pairs of seats: 504-510(image section mirrored), 505-511(image section mirrored), 507-513(image section mirrored) and 508-514(image section mirrored) is exactly the same. Thus, in such embodiment, the same DNN model and associated discrimination embedded space-based classifier can be used to process each one of the cited pairs of seats. Similarly, it can be considered that the position and orientation of the camera 501 relative to the pairs of seats 506-512(image section mirrored),509-515(image section mirrored) is exactly the same so, the same DNN model and associated discrimination embedded space-based classifier can be used to process the cited pairs of seats. The two sections of the corridor will have to be individually processed by specific DNN models and respective associated discrimination embedded space-based classifiers.

For the seats 516 located in correspondence with the emergency exit areas 517 and for the emergency exit areas 517 themselves, specific DNN models with their associated discrimination embedded space-based classifiers will be used.

While the embodiment of Figure 5 shows a particular portion of a cabin of an aircraft with an specific configuration for the monitoring system, the present solution could be applied to different transport means implementing specific configurations of the monitoring system that are adapted to the particular requirements and design of the vehicle in which the present solution is to be installed/deployed.

In this text, the term "comprises" and its derivations (such as "comprising", etc.) should not be understood in an excluding sense, that is, these terms should not be interpreted as excluding the possibility that what is described and defined may include further elements.

The invention is obviously not limited to the specific embodiments described herein, but also encompasses any variations that may be considered by any person skilled in the art within the general scope of the invention as defined in the claims.

## Claims

1. A computer-implemented method (100) for detecting presence of an unallowed object or presence of an object in an unallowed position in passenger compartments of transport means, comprising the steps of:
receiving (101), at a computing system of a transport means, at least one image of the inside of a particular passenger compartment of the transport means;
extracting (102), by a deep neural network (DNN) of the computing system, a descriptive feature vector associated to the received at least one image, the descriptive feature vector containing information of the at least one image indicative of the presence of objects within the passenger compartment, the objects being unallowed objects or objects located in unallowed locations within the passenger compartment;
classifying (103), by an on-site retrainable discriminant embedding space-based classifier of the computing system, the at least one image in a particular class of a set of predefined classes based on the associated descriptive feature vector of the image;
determining (104), by the computing system, the presence of unallowed objects or objects located in unallowed locations within the passenger compartment according to the corresponding class associated to the at least one image; and
training the discriminant embedding space-based classifier by on-site incremental learning on the computing system based on data generated by execution of the method (100).

2. The computer-implemented method (100) according to claim 1, comprising using a different combination of DNN with its associated discriminant embedding space-based classifier for each image received at the computing system.

3. The computer-implemented method (100) according to claim 1 or 2, wherein the at least one image is selected from a group comprising: images of at least one seat inside the passenger compartment, images of transit areas within the passenger compartment, images of emergency exit areas within the passenger compartment or any combination thereof.

4. The computer-implemented method (100) according to any one of the preceding claims, comprising:
dividing, by the computing system, the received at least one image in sections;
extracting, by a different DNN, a descriptive feature vector associated to each one of the sections of the at least one image; and
classifying, by a different discriminant embedding space-based classifier associated to each DNN, each section of the at least one image in a particular class of the set of predefined classes based on the associated descriptive feature vector of the section; and
determining, by the computing system, the presence of unallowed objects or objects located in unallowed locations within the passenger compartment according to the corresponding class associated to each section of the at least one image.

5. The computer-implemented method (100) according to claim 4, wherein each section in which the received at least one image is divided corresponds to individual seats, portions of transit areas or portions of emergency exits of the passenger compartment of the transport means.

6. The computer-implemented method (100) according to any one of the preceding claims, wherein the step of determining the presence of objects within the passenger compartment comprises determining the location of the object within the passenger compartment by identifying the image containing the object.

7. The computer-implemented method (100) according to any one of the preceding claims, comprising previously training the deep neural network using multi-task learning techniques, metric-guided learning techniques or domain-adversarial learning techniques.

8. The computer-implemented method (100) according to any one of the preceding claims, wherein, based on the class in which the at least one image has been classified, the method is further adapted to provide an indication about at least one among:
- distinction of people between passenger and crewmember;
- whether a seat belt of the passenger seat is fastened or not;
- passenger body poses, the body pose being selected from a group comprising: standing, seated, lying down, crouched down and reclined;
- occupancy or open/closed state of the storage compartments;
- tray table in stowed position;
- a backrest position of the seat;
- a medical or health indication for a passenger; and
- behavior of a passenger.

9. A computer program which, when executed by a computer, causes the computer to perform the computer-implemented method according to any one of claims 1 to 8.

10. A non-transitory computer-readable storage medium storing a computer program in accordance with claim 9.

11. A system (400) for detecting presence of an unallowed object or presence of an object in an unallowed position in passenger compartments (401) of transport means, comprising
a monitoring system (402) adapted for being installed into a particular passenger compartment (401) of a transport means, the monitoring system being formed by a plurality of imaging devices (403a-n), preferably cameras or sensors, which are orientable towards seats, transit areas and emergency exit areas within the passenger compartment (402);
**characterized in that** the system (400) further comprises a computing system (405) of the transport means comprising:
a receiving module (406) configured to receive at least one image captured or generated by the monitoring system (402) of the inside of the particular passenger compartment (401); and
processing means (407) configured to
extract, by at least one deep neural network (DNN) module (408), a descriptive feature vector of the received at least one image, the descriptive feature vector containing information of the at least one image indicative of the presence of objects within the passenger compartment (401), the objects being unallowed objects or objects located in unallowed locations within the passenger compartment (401);
classify, by an on-site retrainable discriminant embedded space-based classifier module (409) associated to the at least one DNN module (408), the at least one image in a particular class of a set of predefined classes based on the descriptive feature vector of the at least one image;
determine the presence of unallowed objects or objects located in unallowed locations within the passenger compartment (401) according to the corresponding class associated to the at least one image; and
training the discriminant embedding space-based classifier module (409) by on-site incremental learning on the computing system (405) based on data generated by operation of the system (400).

12. The system (400) according to claim 11, comprising a plurality of DNN modules (408) and a plurality of discrimination embedded space-based classifier modules (409), each DNN module (409) being associated to a particular discrimination embedded space-based classifier module (409) such that each combination of DNN module (408) with its associated discrimination embedded space-based classifier module (409) is configured to process one image received from the monitoring system.

13. The system (400) according to claims 11 or 12, wherein the system comprises:
a splitting module (411) configured to split the received at least one image in a plurality of sections, each section containing an individual seat, a portion of a transit area or a portion of emergency exit of the passenger compartment of the transport means; and
a different DNN module (408) with its associated discrimination embedded space-based classifier module (409) to process each section of the at least one image.

14. A transport means, preferably an aircraft, spacecraft, ship, bus or train, comprising:
a plurality of seats, transit areas and emergency exit areas within at least one passenger compartment;
a system (400) for detecting presence of objects according to any one of claims 11 to 13.

## Patentansprüche

1. Computerimplementiertes Verfahren (100) zum Detektieren der Anwesenheit eines unzulässigen Objekts oder der Anwesenheit eines Objekts an einer unzulässigen Position in Fahrgasträumen von Transportmitteln, umfassend die folgenden Schritte:
Empfangen (101) mindestens eines Bildes des Innenraums eines bestimmten Fahrgastraums des Transportmittels an einem Rechensystem eines Transportmittels;
Extrahieren (102) eines beschreibenden Merkmalsvektors, der mit dem empfangenen mindestens einen Bild verknüpft ist, durch ein tiefes neuronales Netzwerk (DNN) des Rechensystems, wobei der beschreibende Merkmalsvektor Informationen über das mindestens eine Bild enthält, die das Vorhandensein von Objekten in dem Fahrgastraum angeben, wobei die Objekte unzulässige Objekte oder Objekte sind, die sich an unzulässigen Stellen innerhalb des Fahrgastraums befinden;
Klassifizieren (103) des mindestens einen Bildes in eine konkrete Klasse aus einem Satz vordefinierter Klassen, basierend auf dem verknüpften beschreibenden Merkmalsvektor des Bildes, durch einen vor Ort neu trainierbaren, auf einem diskriminativen Einbettungsraum basierenden Klassifikator des Rechensystems;
Bestimmen (104) der Anwesenheit unzulässiger Objekte oder von Objekten, die sich an unzulässigen Stellen innerhalb des Fahrgastraums befinden, gemäß der entsprechenden Klasse, die mit dem mindestens einen Bild verknüpft ist, durch das Rechensystem,; und
Trainieren des auf einem diskriminativen Einbettungsraum basierenden Klassifikators durch inkrementelles Lernen vor Ort auf dem Rechensystem, basierend auf Daten, die durch die Ausführung des Verfahrens (100) generiert werden.

2. Computerimplementiertes Verfahren (100) nach Anspruch 1, umfassend das Verwenden einer anderen Kombination aus einem DNN und seinem verknüpften, auf einem diskriminativen Einbettungsraum basierenden Klassifikator für jedes an dem Rechensystem empfangene Bild.

3. Computerimplementiertes Verfahren (100) nach Anspruch 1 oder 2, wobei das mindestens eine Bild aus einer Gruppe ausgewählt wird, die Folgendes umfasst: Bilder von mindestens einem Sitz im Inneren des Fahrgastraums, Bilder von Durchgangsbereichen innerhalb des Fahrgastraums, Bilder von Notausgangsbereichen innerhalb des Fahrgastraums oder eine beliebige Kombination davon.

4. Computerimplementiertes Verfahren (100) nach einem der vorhergehenden Ansprüche, umfassend:
Aufteilen des empfangenen mindestens einen Bildes in Abschnitten durch das Rechensystem;
Extrahieren eines beschreibenden Merkmalsvektors, der mit jeder der Abschnitten des mindestens einen Bildes verknüpft ist durch ein anderes DNN; und
Klassifizieren jedes Abschnitts des mindestens einen Bildes in eine konkrete Klasse aus dem Satz vordefinierter Klassen, basierend auf dem verknüpften beschreibenden Merkmalsvektor des Abschnitts, durch einen anderen, auf einem diskriminativen Einbettungsraum basierenden Klassifikator, der mit jeder DNN verknüpft ist; und
Bestimmen der Anwesenheit unzulässiger Objekte oder von Objekten, die sich an unzulässigen Stellen innerhalb des Fahrgastraums befinden, gemäß der entsprechenden Klasse, die mit jedem Abschnitt des mindestens einen Bildes verknüpft ist, durch das Rechensystem.

5. Computerimplementiertes Verfahren (100) nach Anspruch 4, wobei jeder Abschnitt, in den das empfangene mindestens eine Bild aufgeteilt ist, einzelnen Sitzen, Abschnitten von Durchgangsbereichen oder Abschnitten von Notausgängen des Fahrgastraums des Transportmittels entspricht.

6. Computerimplementiertes Verfahren (100) nach einem der vorhergehenden Ansprüche, wobei der Schritt des Bestimmens der Anwesenheit von Objekten innerhalb des Fahrgastraums das Bestimmen der Stelle des Objekts innerhalb des Fahrgastraums durch Identifizieren des Bildes, das das Objekt enthält, umfasst.

7. Computerimplementiertes Verfahren (100) nach einem der vorhergehenden Ansprüche, umfassend das vorherige Trainieren des tiefen neuronalen Netzwerks unter Verwendung von Multitask-Lerntechniken, metrikgesteuerten Lerntechniken oder domänenadversären Lerntechniken.

8. Computerimplementiertes Verfahren (100) nach einem der vorhergehenden Ansprüche, wobei, basierend auf der Klasse, in die das mindestens eine Bild klassifiziert wurde, wobei das Verfahren des Weiteren dazu ausgelegt ist, eine Angabe über mindestens eines aus Folgendem bereitzustellen:
- Unterscheidung der Menschen zwischen Fahrgästen und Besatzungsmitgliedern;
- ob ein Sicherheitsgurt des Fahrgastsitzes angelegt ist oder nicht;
- Körperhaltungen des Fahrgastes, wobei die Körperhaltung aus einer Gruppe ausgewählt wird, die Folgendes umfasst: stehend, sitzend, liegend, kauernd und zurückgelehnt;
- Belegungsstatus oder Öffnungs-/Schließzustand der Staufächer;
- Tabletttisch in verstauter Position;
- eine Rückenlehnenposition des Sitzes;
- eine medizinische oder gesundheitliche Indikation bei einem Fahrgast; und
- Verhalten eines Fahrgastes.

9. Computerprogramm, das, wenn es von einem Computer ausgeführt wird, den Computer veranlasst, das computerimplementierte Verfahren nach einem der Ansprüche 1 bis 8 durchzuführen.

10. Nichtflüchtiges, computerlesbares Speichermedium, auf dem ein Computerprogramm nach Anspruch 9 gespeichert ist.

11. System (400) zum Detektieren der Anwesenheit eines unzulässigen Objekts oder der Anwesenheit eines Objekts an einer unzulässigen Position in Fahrgasträumen (401) von Transportmitteln, umfassend
ein Überwachungssystem (402), das dafür ausgelegt ist, in einem konkreten Fahrgastraum (401) eines Transportmittels installiert zu werden, wobei das Überwachungssystem aus einer Vielzahl von Bildgebungsvorrichtungen (403a-n), vorzugsweise Kameras oder Sensoren, gebildet ist, die auf Sitze, Durchgangsbereiche und Notausgangsbereiche innerhalb des Fahrgastraums (402) ausrichtbar sind;
**dadurch gekennzeichnet, dass** das System (400) des Weiteren ein Rechensystem (405) des Transportmittels umfasst, das Folgendes umfasst:
ein Empfangsmodul (406), das dazu konfiguriert ist, mindestens ein von dem Überwachungssystem (402) aufgenommenes oder generiertes Bild des Innenraums des konkreten Fahrgastraums (401) zu empfangen; und
Verarbeitungsmittel (407), die zu Folgendem konfiguriert sind:
Extrahieren eines beschreibenden Merkmalsvektors des empfangenen mindestens einen Bildes durch mindestens ein tiefes neuronales Netzwerkmodul (DNN) (408), wobei der beschreibende Merkmalsvektor Informationen des mindestens einen Bildes enthält, die die Anwesenheit von Objekten innerhalb des Fahrgastraums (401) angeben, wobei die Objekte unzulässige Objekte oder Objekte sind, die sich an unzulässigen Stellen innerhalb des Fahrgastraums (401) befinden;
Klassifizieren des mindestens einen Bildes in eine konkrete Klasse aus einem Satz vordefinierter Klassen, basierend auf dem beschreibenden Merkmalsvektor des mindestens einen Bildes, durch ein vor Ort neu trainierbares, auf einem diskriminativen Einbettungsraum basierenden Klassifikatormodul (409), das mit dem mindestens einen DNN-Modul (408) verknüpft ist,;
Bestimmen der Anwesenheit unzulässiger Objekte oder von Objekten, die sich an unzulässigen Stellen innerhalb des Fahrgastraums (401) befinden, gemäß der entsprechenden Klasse, die mit dem mindestens einen Bild verknüpft ist; und
Trainieren des auf einem diskriminativen Einbettungsraum basierenden Klassifikatormoduls (409) durch inkrementelles Lernen vor Ort auf dem Rechensystem (405), basierend auf Daten, die durch den Betrieb des Systems (400) generiert werden.

12. System (400) nach Anspruch 11, umfassend eine Vielzahl von DNN-Modulen (408) und eine Vielzahl von auf einem diskriminativen Einbettungsraum basierenden Klassifikatormodulen (409), wobei jedes DNN-Modul (409) mit einem konkreten, auf einem diskriminativen Einbettungsraum basierenden Klassifikatormodul (409) verknüpft ist, sodass jede Kombination eines DNN-Modul (408) mit seinem verknüpften, auf einem diskriminativen Einbettungsraum basierenden Klassifikatormodul (409) dazu konfiguriert ist, ein von dem Überwachungssystem empfangenes Bild zu verarbeiten.

13. System (400) nach Anspruch 11 oder 12, wobei das System Folgendes umfasst:
ein Aufspaltungsmodul (411), das dazu konfiguriert ist, das empfangene mindestens eine Bild in eine Vielzahl von Abschnitten aufzuspalten, wobei jederAbschnitt einen einzelnen Sitz, einen Teil eines Durchgangsbereichs oder einen Teil eines Notausgangs des Fahrgastraums des Transportmittels enthält; und
ein anderes DNN-Modul (408) mit seinem verknüpften, auf einem diskriminativen Einbettungsraum basierenden Klassifikatormodul (409) zur Verarbeitung jedes Abschnitts des mindestens einen Bildes.

14. Transportmittel, vorzugsweise ein Flugzeug, ein Raumfahrzeug, ein Schiff, ein Bus oder ein Zug, umfassend:
eine Vielzahl von Sitzen, Durchgangsbereichen und Notausgangsbereichen innerhalb mindestens eines Fahrgastraums;
ein System (400) zum Detektieren der Anwesenheit von Objekten nach einem der Ansprüche 11 bis 13.

## Revendications

1. Méthode (100) mise en œuvre par ordinateur pour détecter la présence d'un objet non autorisé ou la présence d'un objet dans une position non autorisée dans des cabines passagers de moyens de transport, comprenant les étapes suivantes :
au niveau d'un système informatique d'un moyen de transport, recevoir (101) au moins une image de l'intérieur d'une cabine passagers particulière du moyen de transport ;
par un réseau neuronal profond (DNN) du système informatique, extraire (102) un vecteur de caractéristiques descriptives associé à l'au moins une image reçue, le vecteur de caractéristiques descriptives contenant des informations de l'au moins une image indiquant la présence d'objets au sein de la cabine passagers, les objets étant des objets non autorisés ou des objets situés dans des emplacements non autorisés au sein de la cabine passagers ;
par un classificateur spatial intégré discriminant ré-entraînable sur site du système informatique, classer (103) l'au moins une image dans une classe particulière d'un ensemble de classes prédéfinies sur la base du vecteur de caractéristiques descriptives associé de l'image ;
par le système informatique, déterminer (104) la présence d'objets non autorisés ou d'objets situés dans des emplacements non autorisés au sein de la cabine passagers selon la classe correspondante associée à l'au moins une image ; et
entraîner le classificateur spatial intégré discriminant par apprentissage incrémental sur site sur le système informatique sur la base de données générées par l'exécution de la méthode (100).

2. Méthode (100) mise en œuvre par ordinateur selon la revendication 1, comprenant l'utilisation d'une combinaison différente de DNN avec son classificateur spatial intégré discriminant associé pour chaque image reçue sur le système informatique.

3. Méthode (100) mise en œuvre par ordinateur selon la revendication 1 ou 2, dans laquelle l'au moins une image est choisie dans un groupe comprenant : des images d'au moins un siège à l'intérieur de la cabine passagers, des images de zones de passage au sein de la cabine passagers, des images de zones d'issues de secours au sein de la cabine passagers ou toute combinaison de celles-ci.

4. Méthode (100) mise en œuvre par ordinateur selon l'une des revendications précédentes, comprenant les étapes suivantes :
par le système informatique, diviser l'au moins une image reçue en sections ;
par un DNN différent, extraire un vecteur de caractéristiques descriptives associé à chacune des sections de l'au moins une image ; et
par un classificateur spatial intégré discriminant différent associé à chaque DNN, classer chaque section de l'au moins une image dans une classe particulière de l'ensemble de classes prédéfinies sur la base du vecteur de caractéristiques descriptives associé de la section ; et
par le système informatique, déterminer la présence d'objets non autorisés ou d'objets situés dans des emplacements non autorisés au sein de la cabine passagers selon la classe correspondante associée à chaque section de l'au moins une image.

5. Méthode (100) mise en œuvre par ordinateur selon la revendication 4, dans laquelle chaque section de division de l'au moins une image reçue correspond à des sièges individuels, à des parties de zones de passage ou à des parties d'issues de secours de la cabine passagers du moyen de transport.

6. Méthode (100) mise en œuvre par ordinateur selon l'une des revendications précédentes, dans laquelle l'étape de détermination de la présence d'objets au sein de la cabine passagers comprend la détermination de l'emplacement de l'objet au sein de la cabine passagers en identifiant l'image contenant l'objet.

7. Méthode (100) mise en œuvre par ordinateur selon l'une des revendications précédentes, comprenant l'entraînement préalable du réseau neuronal profond en utilisant des techniques d'apprentissage multitâche, des techniques d'apprentissage guidé par métrique ou des techniques d'apprentissage antagoniste par domaine.

8. Méthode (100) mise en œuvre par ordinateur selon l'une des revendications précédentes, dans laquelle, sur la base de la classe où l'au moins une image a été classée, la méthode est en outre adaptée pour fournir une indication concernant au moins un des éléments suivants :
- une distinction entre les passagers et les membres d'équipage ;
- le fait qu'une ceinture de sécurité de siège passager soit bouclée ou non ;
- des postures du corps d'un passager, la posture du corps étant choisie dans un groupe comprenant : debout, assis, allongé, accroupi et incliné ;
- l'occupation ou l'état ouvert/fermé des compartiments de rangement ;
- une tablette en position repliée ;
- une position de dossier du siège ;
- une indication médicale ou de santé d'un passager ; et
- le comportement d'un passager.

9. Programme informatique qui, lorsqu'il est exécuté par un ordinateur, amène l'ordinateur à mettre en œuvre la méthode mise en œuvre par ordinateur selon l'une des revendications 1 à 8.

10. Support de stockage non transitoire lisible par ordinateur stockant un programme informatique conformément à la revendication 9.

11. Système (400) pour détecter la présence d'un objet non autorisé ou la présence d'un objet dans une position non autorisée dans des cabines passagers (401) de moyens de transport, comprenant
un système de surveillance (402) adapté pour être installé dans une cabine passagers (401) particulière d'un moyen de transport, le système de surveillance se composant d'une pluralité de dispositifs d'imagerie (403a-n), de préférence des caméras ou des capteurs orientables vers les sièges et les zones de passage et d'issues de secours au sein de la cabine passagers (402) ;
**caractérisé en ce que** le système (400) comprend en outre un système informatique (405) du moyen de transport comprenant :
un module de réception (406) configuré pour recevoir au moins une image de l'intérieur de la cabine passagers particulière (401), capturée ou générée par le système de surveillance (402) ; et
des moyens de traitement (407) configurés pour
par au moins un module de réseau neuronal profond (DNN) (408), extraire un vecteur de caractéristiques descriptives de l'au moins une image reçue, le vecteur de caractéristiques descriptives contenant des informations de l'au moins une image indiquant la présence d'objets au sein de la cabine passagers (401), les objets étant des objets non autorisés ou des objets situés dans des emplacements non autorisés au sein de la cabine passagers (401) ;
par un module de classificateur spatial intégré discriminant ré-entraînable sur site (409) associé à l'au moins un module DNN (408), classer l'au moins une image dans une classe particulière d'un ensemble de classes prédéfinies sur la base du vecteur de caractéristiques descriptives de l'au moins une image ;
déterminer la présence d'objets non autorisés ou d'objets situés dans des emplacements non autorisés au sein de la cabine passagers (401) selon la classe correspondante associée à l'au moins une image ; et
entraîner le module de classificateur spatial intégré discriminant (409) par apprentissage incrémental sur site sur le système informatique (405) sur la base de données générées par l'actionnement du système (400).

12. Système (400) selon la revendication 11, comprenant une pluralité de modules DNN (408) et une pluralité de modules de classificateur spatial intégré discriminant (409), chaque module DNN (409) étant associé à un module de classificateur spatial intégré discriminant (409) particulier de sorte que chaque combinaison de module DNN (408) avec son module de classificateur spatial intégré discriminant (409) associé soit configurée pour traiter une image reçue du système de surveillance.

13. Système (400) selon la revendications 11 ou 12, dans lequel le système comprend :
un module de division (411) configuré pour diviser l'au moins une image reçue en une pluralité de sections, chaque section contenant un siège individuel, une partie d'une zone de passage ou une partie d'une issue de secours de la cabine passagers du moyen de transport ; et
un module DNN différent (408) avec son module de classificateur spatial intégré discriminant (409) associé pour traiter chaque section de l'au moins une image.

14. Moyen de transport, de préférence un aéronef, un engin spatial, un navire, un autobus ou un train, comprenant :
une pluralité de sièges, zones de passage et zones d'issues de secours au sein d'au moins une cabine passagers ;
un système (400) pour détecter la présence d'objets selon l'une des revendications 11 à 13.
